# FASCICULE DE BREVET EUROPEEN

(11) **EP 4 526 162 B1**
(45) Date de publication et mention de la délivrance du brevet: **10.06.2026**
(21) Numéro de dépôt: 23725287.9
(22) Date de dépôt: 19.04.2023
(51) Int. Cl.: B60R 19/34, F16F 7/12

(54) **DISPOSITIF ALLÉGÉ D'ABSORPTION DES CHOCS POUR VÉHICULES AUTOMOBILES**
LEICHTE STOSSDÄMPFUNGSVORRICHTUNG FÜR KRAFTFAHRZEUGE
LIGHTWEIGHT IMPACT-ABSORBING DEVICE FOR MOTOR VEHICLES

(30) Priorité: 20.05.2022 FR 2204820
(43) Date de publication de la demande: 26.03.2025
(73) Titulaire: Stellantis Auto SAS, 78300 Poissy (FR)
(72) Inventeur: PERON, Rodolphe, 95220 HERBLAY SUR SEINE (FR); ROYER, Guillaume, 91680 BRUYERES LE CHATEL (FR)
(74) Mandataire: BCIP
(86) Numéro de dépôt international: PCT/FR2023/050563
(87) Numéro de publication internationale: WO 2023/222964

(56) Documents cités:
- EP-A2- 1 477 371
- GB-A- 2 507 406
- US-A- 4 272 114

## Description

La présente invention revendique la priorité de la demande française 2204820 déposée le 20 mai 2022.

L'invention concerne, de façon générale, le domaine de la sécurité des véhicules automobiles et s'intéresse, plus particulièrement, aux systèmes destinés à l'absorption des chocs survenant à l'avant ou à l'arrière et en partie basse des véhicules.

Les véhicules automobiles sont généralement équipés de dispositifs intégrés à des parechocs et destinés à assurer l'absorption de l'énergie cinétique résultant de collisions contre un obstacle, un autre véhicule ou une personne physique. Ces dispositifs (dénommés « crash box ») sont réalisés sous forme d'un assemblage de coques profilées et embouties.

Le poids de ces dispositifs est important et ils contribuent donc à l'alourdissement du véhicule alors que la tendance actuelle est à l'allégement.

En outre, la capacité de déformation de ces dispositifs et, en particulier, leur compressibilité, en cas de contact avec les jambes d'un piéton, est relativement faible.

GB2507406A divulgue un dispositif d'absorption des chocs du type crash box conformement au préambule de la revendication 1. Le brevet DE 102011051442B4 décrit l'intégration de crash boxes dans une traverse métallique pourvue d'un élément de protection des piétons. Cet élément de protection est réalisé dans un matériau ayant une dureté inférieure à celle du matériau de la traverse, la traverse étant convertible entre une position de garde piéton et une position de collision.

La demande de brevet EP1477371A3 décrit une crash box disposée entre un longeron et une traverse de pare-chocs de véhicule. Cette crash box comprend un profilé sous forme d'au moins un corps creux longitudinal pourvu de pattes latérales qui compensent, par déformation, les efforts générés par un impact.

Cependant, les déformations de ces crash boxes existantes ne sont pas maîtrisées de façon satisfaisante au cours de la phase d'impact ce qui est problématique en cas de collision avec des piétons.

Dans ce contexte, l'invention a cherché une solution technique perfectionnée permettant de résoudre les insuffisances de l'art antérieur et, en particulier, qui soit mieux adaptée à la protection des piétons. Ainsi, dans son principe, l'invention vise à proposer un dispositif allégé d'absorption des chocs dont la capacité de déformation évolue de façon variable pendant la phase d'impact.

Ce but est atteint, selon un premier aspect de l'invention, au moyen d'un dispositif d'absorption des chocs du type crash box comprenant un profilé creux présentant un premier tronçon d'extrémité destiné à être raccordé à une traverse de parechocs et un second tronçon d'extrémité destiné à être raccordé à la caisse du véhicule, ledit profilé étant délimité par une paroi supérieure, une paroi inférieure et deux parois latérales, lesdites parois étant pourvues d'une série d'évidements destinés à augmenter la capacité de déformation du profilé, dont lesdits évidements sont de dimensions variables entre le premier tronçon d'extrémité et le second tronçon d'extrémité.

Selon l'invention, les dimensions des évidements des parois supérieure et inférieure sont décroissantes du premier tronçon d'extrémité au second tronçon d'extrémité afin d'augmenter la compressibilité du profilé au début du choc contre la traverse.

Selon une autre caractéristique, les évidements ménagés sur les parois latérales sont plus étroits que les évidements ménagés sur les parois supérieure et inférieure du premier tronçon d'extrémité afin d'éviter un déversement lors du choc.

Selon une première variante de réalisation du dispositif de l'invention, les évidements des parois supérieure et inférieure sont réalisés de façon symétrique sur le profilé.

Selon une seconde variante de réalisation du dispositif de l'invention, les évidements des parois latérales sont identiques et réalisés de façon symétrique de part et d'autre du profilé.

Selon encore une autre variante de réalisation du dispositif de l'invention, le profilé présente un tronçon intermédiaire entre le premier tronçon et le second tronçon d'extrémité et dont les parois supérieure, inférieure et latérales sont dépourvues d'évidement afin de réduire localement la compressibilité du profilé.

De préférence, les contours des évidements sont au moins partiellement arrondis.

Un autre objet de l'invention est un parechoc de véhicule automobile pourvu d'un dispositif d'absorption des chocs du type crash box tel que défini ci-dessus.

Encore un autre objet de l'invention est un véhicule automobile équipé d'au moins un dispositif d'absorption des chocs du type crash box présentant les caractéristiques définies ci-dessus.

Ainsi, dans son principe le plus général, l'invention propose un dispositif performant d'absorption de l'énergie cinétique résultant des chocs dont la capacité de déformation est contrôlée afin de protéger au mieux les piétons lors d'une collision avec un véhicule automobile.

Le dispositif de l'invention peut être utilisé aussi bien à l'avant qu'à l'arrière d'un véhicule. Grâce à la présence de la série d'évidements dont les dimensions et les positions sont déterminées en fonction des normes de sécurité, le dispositif de l'invention est allégé par rapport aux crash boxes traditionnelles.

En outre, l'efficacité du dispositif de l'invention est améliorée car la compressibilité du tronçon de la crash box venant heurter les membres inférieurs des piétons est augmentée de façon significative ce qui permet de réduire les risques de traumatismes sévères.

D'autres caractéristiques et avantages de l'invention ressortiront à la lecture de la description qui va suivre, en référence aux figures annexées, pour lesquelles :
[Fig. 1] est une vue en perspective d'ensemble d'un mode de réalisation préférentiel d'un parechoc selon l'invention.
[Fig. 2] est une vue en perspective de dessus du dispositif d'absorption de l'énergie cinétique (crash box) intégré au parechoc de la figure 1.
[Fig. 3] est une vue de dessus du dispositif d'absorption de l'énergie cinétique (crash box) de la figure 2.

Pour plus de clarté, les éléments identiques ou similaires sont repérés par des signes de référence identiques sur l'ensemble des figures.

Naturellement, les modes de réalisation du dispositif d'absorption de l'énergie cinétique selon l'invention illustrés schématiquement par les figures présentées ci-dessus et décrites ci-après, ne sont donnés qu'à titre d'exemples non limitatifs. Il est explicitement prévu dans le cadre de l'invention que l'on puisse proposer et combiner entre eux différents modes pour en proposer d'autres.

L'invention concerne le domaine général de la sécurité passive des véhicules automobiles et s'intéresse, plus particulièrement, aux dispositifs d'absorption de l'énergie cinétique (dits aussi crash boxes) résultant des chocs à l'avant ou à l'arrière des véhicules.

Plus précisément, l'invention a cherché à développer une solution technique intégrant un dispositif d'absorption qui, tout en étant allégé, présente une capacité de déformation maîtrisée afin de renforcer la sécurité des piétons en cas de collision accidentelle avec un véhicule.

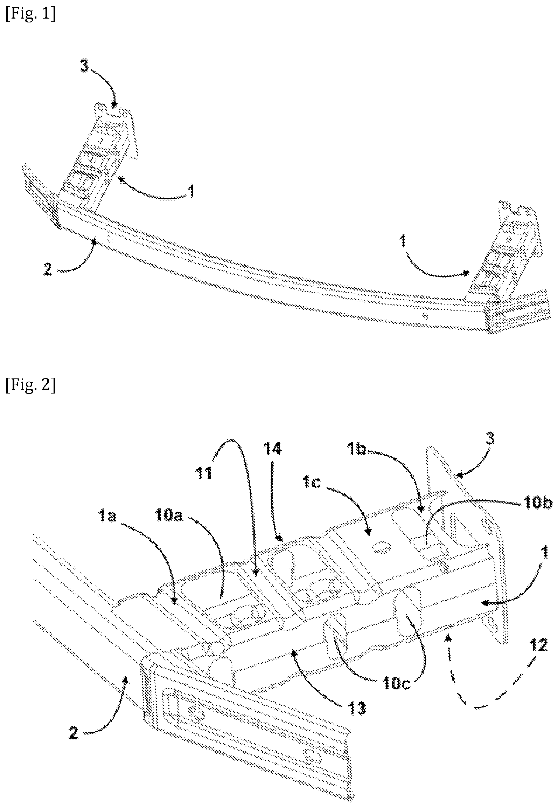

De manière connue et comme illustré par la figure 1, les dispositifs d'absorption des chocs du type crash box comprennent un profilé creux 1 présentant un premier tronçon d'extrémité 1a destiné à être raccordé à une traverse 2 de parechoc et un second tronçon d'extrémité 1b destiné à être raccordé à la caisse du véhicule (non représentée) au moyen d'une platine 3.

Ce profilé 1 est délimité, respectivement, par une paroi supérieure 11, une paroi inférieure 12 et deux parois latérales 13, 14, comme illustré en détail par la figure 2. Les parois 12 à 14 sont pourvues d'une série d'évidements 10a, 10b, 10c destinés à augmenter la capacité de déformation du profilé 1 en réduisant au maximum les surfaces planes et pleines sur ces parois.

L'invention a pour objectif d'optimiser les caractéristiques de la série d'évidements sur le profilé 1 pour améliorer sélectivement et localement sa capacité de déformation et, en particulier, sa compressibilité à l'égard des chocs. Cet objectif est atteint principalement en réalisant des évidements de dimensions variables entre le premier tronçon d'extrémité 1a au second tronçon d'extrémité 1b.

Plus précisément, l'invention prévoit que les dimensions, (c'est-à-dire les surfaces ou aires) des évidements 10a, 10b des parois supérieure 11 et inférieure 12 soient décroissantes en allant du premier tronçon d'extrémité 1a (raccordé ici au parechoc avant du véhicule) au second tronçon d'extrémité 1b (raccordé ici à la caisse).

Dans le mode de réalisation représenté sur les figures, deux évidements 10a sont réalisés au-dessus et en dessous du premier tronçon 1a et deux autres évidements 10b sont réalisés au-dessus et en dessous du second tronçon 1b. Toutefois, il est possible, sans sortir du cadre de l'invention, d'ajuster le nombre, la position et les caractéristiques dimensionnelles des différents évidements en fonction du type de véhicule et des niveaux de sécurité recherchés.

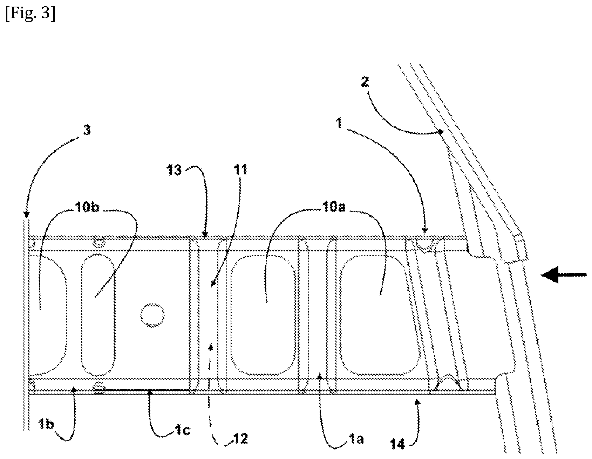

Cette configuration spécifique de l'invention permet d'augmenter la compressibilité du profilé 1 au début d'un choc survenant contre la traverse 2 du parechoc (comme dans le sens de la flèche sur la figure 3). La surface des évidements 10a des faces supérieure 11 et inférieure 12 du premier tronçon 1a est donc plus importante que celle des évidements 10b se trouvant au-dessus et en dessous du second tronçon 1b.

En effet, la réduction de matière dans les parties du profilé 1 où se trouvent les évidements s'accompagne d'un affaiblissement local. Or, cet affaiblissement est essentiel dans la zone de la crash box la plus exposée aux chocs, c'est-à-dire, dans le tronçon d'extrémité 1a raccordé à la traverse 2 du parechoc, afin de minimiser sa résistance au début du choc. Ainsi, le tronçon 1a avant du profilé 1 s'écrasera plus vite et plus facilement au début du choc ce qui permet de mieux protéger les membres inférieurs des piétons.

En outre, les évidements correspondent naturellement à des zones où la matière est absente et ces zones ne seront donc pas déformées lors de la cinématique de déplacement de la crash box vers la caisse du véhicule, au-delà du tronçon 1b. Ainsi, grâce à l'invention, le niveau de compression se trouve augmenté en début de choc et maîtrisé en efforts dans le temps. Parallèlement, le niveau de compression est réduit en fin de choc après avoir atteint un pic d'effort.

Toujours dans la poursuite de cet objectif et de façon complémentaire, les évidements 10c ménagés sur les parois latérales 13, 14 sont plus étroits (ou de surface plus faible) que les évidements 10a ménagés sur les parois supérieure 11 et inférieure 12 du premier tronçon d'extrémité 1a. En outre, ces évidements 10c (ici au nombre de trois de chaque côté du profilé) sont positionnés et dimensionnés afin d'éviter un déversement vers la droite ou vers la gauche lors du choc. Dans le mode de réalisation représenté sur la figure 2, les évidements 10c sont décalés longitudinalement par rapport aux évidements 10a, 10b.

Il est possible, sans sortir du cadre de l'invention, de prévoir que les caractéristiques dimensionnelles des évidements 10c des parois latérales 13, 14 soient éventuellement identiques à celles des évidements 10b réalisés sur les parois supérieure 11 et inférieur 12 du second tronçon d'extrémité 1b du profilé 1.

Dans le mode de réalisation représenté sur les figures, les évidements des parois supérieure 11 et inférieure 12 sont réalisés de façon symétrique. De même, les évidements des parois latérales 13, 14 sont ici identiques et réalisés de façon symétrique de part et d'autre du profilé 1.

Le profilé 1 présente ici un tronçon intermédiaire 1c entre le premier tronçon d'extrémité 1a et le second tronçon d'extrémité 1b. Sur ce tronçon intermédiaire 1c, les parois supérieure 11, inférieure 12 et latérales 13, 14 sont toutes dépourvues d'évidement. Ce tronçon 1c délimite ainsi une zone où la rigidité est plus importante afin d'augmenter le pic d'effort lors du choc et de réduire localement la compressibilité du profilé 1.

## Revendications

1. Dispositif d'absorption des chocs du type crash box comprenant un profilé creux (1) présentant un premier tronçon d'extrémité (1a) destiné à être raccordé à une traverse (2) de parechocs et un second tronçon d'extrémité (1b) destiné à être raccordé à la caisse du véhicule, ledit profilé étant délimité par une paroi supérieure (11), une paroi inférieure (12) et deux parois latérales (13, 14), lesdites parois étant pourvues d'une série d'évidements (10a, 10b, 10c) destinés à augmenter la capacité de déformation du profilé, lesdits évidements (10) étant de dimensions variables entre le premier tronçon d'extrémité (1a) et le second tronçon d'extrémité (1b), **caractérisé en ce que** les dimensions desdits évidements (10a, 10b) des parois supérieure (11) et inférieure (12) sont décroissantes du premier tronçon d'extrémité (1a) au second tronçon d'extrémité (1b) afin d'augmenter la compressibilité du profilé (1) au début du choc contre la traverse (2).

2. Dispositif selon la revendication précédente, **caractérisé en ce que** les évidements (10c) ménagés sur les parois latérales (13, 14) sont plus étroits que les évidements (10a ménagés sur les parois supérieure (11) et inférieure (12) du premier tronçon d'extrémité (1a) afin d'éviter un déversement lors du choc.

3. Dispositif selon l'une des revendications précédentes, **caractérisé en ce que** les évidements (10a, 10b) des parois supérieure (11) et inférieure (12) sont réalisés de façon symétrique sur le profilé (1).

4. Dispositif selon l'une des revendications précédentes, **caractérisé en ce que** les évidements des parois latérales (13, 14) sont identiques et réalisés de façon symétrique de part et d'autre du profilé (1).

5. Dispositif selon l'une des revendications précédentes, **caractérisé en ce que** le profilé présente un tronçon intermédiaire (1c) entre le premier tronçon d'extrémité (1a) et le second tronçon d'extrémité (1b) et dont les parois supérieure (11), inférieure (12) et latérales (13, 14) sont dépourvues d'évidement afin de réduire localement la compressibilité du profilé (1).

6. Dispositif selon l'une des revendications précédentes, **caractérisé en ce que** les contours desdits évidements (10a, 10b, 10c) sont au moins partiellement arrondis.

7. Parechocs de véhicule automobile pourvu d'un dispositif d'absorption des chocs du type crash box selon l'une des revendications précédentes

8. Véhicule automobile équipé d'au moins un dispositif d'absorption des chocs du type crash box selon l'une des revendications 1 à 6.

## Patentansprüche

1. Crashbox-Stoßdämpfervorrichtung mit einem Hohlprofil (1), das einen ersten Endabschnitt (1a) zur Verbindung mit einem Querträger (2) für einen Stoßdämpfer und einen zweiten Endabschnitt (1b) zur Verbindung mit dem Fahrzeugaufbau aufweist, wobei das Profil durch eine obere Wand (11), eine untere Wand (12) und zwei Seitenwände (13, 14) begrenzt ist, wobei die Wände mit einer Reihe von Aussparungen (10a, 10b, 10c) zur Erhöhung der Verformungsfähigkeit versehen sind Profil, wobei die Ausnehmungen (10) unterschiedliche Abmessungen zwischen dem ersten Endabschnitt (1a) und dem zweiten Endabschnitt (1b) haben, **dadurch gekennzeichnet, dass** die Abmessungen der Ausnehmungen (10a, 10b) der oberen (11) und unteren (12) Wand vom ersten Endabschnitt (1a) zum zweiten Endabschnitt (1b) abnehmen, um die Kompressibilität des Profils (1) zu Beginn des Aufpralls auf die Traverse (2) zu erhöhen.

2. Vorrichtung nach dem vorhergehenden Anspruch, **dadurch gekennzeichnet, dass** die Ausnehmungen (10c) an den Seitenwänden (13, 14) schmaler sind als die Ausnehmungen (10a) an der oberen (11) und der unteren (12) Wand des ersten Endabschnitts (1a), um ein Verschütten bei dem Aufprall zu vermeiden.

3. Vorrichtung nach einem der vorhergehenden Ansprüche, **dadurch gekennzeichnet, dass** die Ausnehmungen (10a, 10b) der oberen (11) und unteren (12) Wand symmetrisch am Profil (1) ausgebildet sind.

4. Vorrichtung nach einem der vorhergehenden Ansprüche, **dadurch gekennzeichnet, dass** die Ausnehmungen der Seitenwände (13, 14) identisch sind und beiderseits des Profils (1) symmetrisch ausgebildet sind.

5. Vorrichtung nach einem der vorhergehenden Ansprüche, **dadurch gekennzeichnet, dass** das Profil einen Zwischenabschnitt (1c) zwischen dem ersten Endabschnitt (1a) und dem zweiten Endabschnitt (1b) aufweist, dessen obere (11), untere (12) und seitliche Wände (13, 14) keine Aussparungen aufweisen, um die Kompressibilität des Profils (1) lokal zu verringern.

6. Vorrichtung nach einem der vorhergehenden Ansprüche, **dadurch gekennzeichnet, dass** die Konturen der Ausnehmungen (10a, 10b, 10c) zumindest teilweise abgerundet sind.

7. Kraftfahrzeugstoßstangen mit einer Crashbox-Stoßdämpfungsvorrichtung nach einem der vorhergehenden Ansprüche

8. Kraftfahrzeug, das mit mindestens einer Crashbox-Stoßdämpfungsvorrichtung nach einem der Ansprüche 1 bis 6 ausgestattet ist.

## Claims

1. A crash box type shock absorbing device comprising a hollow section (1) having a first end section (1a) adapted to be connected to a bumper cross-member (2) and a second end section (1b) adapted to be connected to the body of the vehicle, said section being defined by an upper wall (11), a lower wall (12) and two lateral walls (13, 14), said walls being provided with a series of recesses (10a, 10b, 10c) adapted to increase the deformation capacity of the section, said recesses (10) being of variable sizes between the first end section (1a) and the second end section (1b), wherein the sizes of said recesses (10a, 10b) of the upper and lower walls (11) (12) are decreasing from the first end section (1 a) to the second end section (1 b) in order to increase the compressibility of the section (1) at the beginning of the impact against the cross-member (2).

2. Device according to claim 1, wherein the recesses (10c) formed in the side walls (13, 14) are narrower than the recesses (10a) formed in the upper (11) and lower (12) walls of the first end section (1a) in order to prevent a spill during the impact.

3. Device according to one of the previous claims, wherein the recesses (10a, 10b) of the upper (11) and lower (12) walls are symmetrically realised on the profile (1).

4. Device according to one of the previous claims, wherein the recesses of the side walls (13, 14) are identical and symmetrically realised on either side of the section (1).

5. Device according to one of the previous claims, wherein the section has an intermediate section (1c) between the first end section (1a) and the second end section (1b) and whose upper (11), lower (12) and lateral (13, 14) walls have no recess in order to locally reduce the compressibility of the section (1).

6. Device according to one of the previous claims, wherein the contours of said recesses (10a, 10b, 10c) are at least partially rounded.

7. Motor vehicle bumpers provided with a crash box type shock absorbing device according to one of the previous claims

8. Motor vehicle equipped with at least one crash box type shock absorbing device according to one of claims 1 to 6.
